# EUROPÄISCHE PATENTSCHRIFT

(11) **EP 0 705 675 B1**
(45) Veröffentlichungstag und Bekanntmachung des Hinweises auf die Patenterteilung: **27.06.2001**
(21) Anmeldenummer: 95115626.4
(22) Anmeldetag: 04.10.1995
(51) Int. Cl.: B29C 45/18, B29C 45/50

(54) **Vorrichtung zur Plastifizierung von Kunststoffen in Plastifiziereinrichtungen von intermittierend arbeitenden Spritzgiessmaschinen**
Apparatus for plasticising of plastic materials in plasticising units of intermittently operating injection moulding machines
Dispositif de plastification de matières plastiques dans des unités de plastification de machines à mouler par injection fonctionnant par intermittence

(30) Priorität: 04.10.1994 DE 4435416
(43) Veröffentlichungstag der Anmeldung: 10.04.1996
(73) Patentinhaber: CKT Kunststoffverarbeitungstechnik GmbH Chemnitz, D-09322 Tauscha (DE)
(72) Erfinder: Seidel, Franziska, D-09130 Chemnitz (DE); Brunner, Dietmar, D-09130 Chemnitz (DE); Klemm, Günther, D-09573 Marbach (DE)
(74) Vertreter: Findeisen, Andreas

(56) Entgegenhaltungen:
- DE-A- 2 007 170
- DE-B- 1 167 006
- PATENT ABSTRACTS OF JAPAN vol. 18 no. 422 (M-1651) ,8.August 1994 & JP-A-06 126776 (JAPAN STEEL WORKS LTD) 10.Mai 1994,
- PATENT ABSTRACTS OF JAPAN vol. 11 no. 39 (M-559) [2486] ,5.Februar 1987 & JP-A-61 206617 (TOSHIBA MACH CO LTD) 12.September 1986,
- PATENT ABSTRACTS OF JAPAN vol. 16 no. 534 (M-1334) ,4.November 1992 & JP-A-04 201223 (SEKISUI CHEM CO LTD) 22.Juli 1992,

## Beschreibung

Die Erfindung betrifft eine Vorrichtung zur Plastifizierung von Kunststoffen in Plastifiziereinrichtungen von intermittierend arbeitenden Spritzgießmaschinen, die einen Plastifizierzylinder konstanter Länge mit einer axial feststehenden und dem Trichkrausgang entsprechenden Einfüllöffnung für das zu verarbeitende Material und einen im Plastifizierzylinder radial drehbar sowie axial verschiebbar gelagerten Schneckenkolben aufweisen. Hierbei wird mit dem Schneckenkolben das über die Einfüllöffnung zugeführte Material aufgeschmolzen, in einen Sammelraum gefördert und nachfolgend in die Form eingespritzt.

Für die Plastifizierung von Kunststoffen in intermittierend arbeitenden Spritzgießmaschinen werden vorzugsweise Plastifiziereinrichtungen verwendet, die einen Plastifizierzylinder mit einer radial drehbaren und axial verschiebbaren Plastifizierschnecke aufweisen. Zum Beschicken der Plastifiziereinrichtung mit dem zu verarbeitenden Kunststoff sind überwiegend Einfülltrichter mit einer kreisförmigen Materialeintrittsöffnung am Plastifizierzylinder angeordnet. Der Durchmesser der Einfüllöffnung entspricht in der Regel dem Zylinderinnendurchmesser. Die notwendige Aufbereitung der Kunststoffschmelze erfolgt mit der Plastifizierschnecke, deren Aufgabe es ist, den Kunststoff einzuziehen, zu fördern, zu plastifizieren und für den Einspritzvorgang in das Werkzeug in einem Sammelraum innerhalb des Plastifizierzylinders bereitzustellen. Solche Plastifizierschnecken werden als Schneckenkolben bezeichnet.

Die Doppelfunktion des Schneckenkolbens als Plastifizier- und Einspritzaggregat ergibt systembedingte Unregelmäßigkeiten, indem durch die Axialbewegung der Schnecke beim Plastifizieren und Einspritzen keine gleichmäßige Beschickung der Schneckengänge erfolgen kann. Somit entstehen beim Plastifizieren thermische und stoffliche Inhomogenitäten in der Kunststoffschmelze. Nach Bereitstellung der Kunststoffschmelze im Sammelraum wird mit dem Schneckenkolben das Einspritzen des entsprechenden Dosiervolumens in das Werkzeug realisiert. Wenn der Einspritzvorgang beendet ist, befindet sich der Schneckenkolben in der vorderen Endstellung. Im folgenden Plastifiziervorgang fördert der Schneckenkolben den Kunststoff in Richtung Sammelraum und bewegt sich durch den Druckaufbau im Sammelraum axial entgegengesetzt zur Förderrichtung der Kunststoffschmelze. Weil nur der unter der Einfüllöffnung gelegene Schneckenbereich den Kunststoff einzieht, bleiben die Schneckengänge beim Plastifiziervorgang nach dem Passieren der hinteren Einfüllkante frei von Kunststoff. Während des sich anschließenden Einspritzvorganges werden die leeren Schneckengänge unter der Einfüllöffnung vorbeigeschoben und aufgrund der Einspritzgeschwindigkeit des Schneckenkolbens kann nur geringfügig Kunststoffmaterial aus der Einfüllöffnung in die freien Schneckengänge gelangen. Diese leeren bzw. lediglich teilweise gefüllten Schneckengänge müssen beim nächsten Plastifiziervorgang durch Schneckenrotation erst wieder gefüllt werden.

Obwohl bereits verschiedenartige Lösungsvorschläge bekannt sind, verbleiben funktionelle Mängel: So beschreibt DE-A-20 07 170 eine Baueinheit, die aus zwei hintereinander angeordneten Schnecken und Zylindern mit jeweils unterschiedlichen Durchmessern zusammengefügt ist, wobei sich im Verfahrensablauf ständig die Zylinderlänge ändert. Allerdings sind nur die Schneckengänge in der Einzugszone ständig gefüllt. Danach erfolgt entweder eine Unterfütterung der Meteringzone, so daß eine vollständige Füllung der gesamten profilierten Schneckenlänge nicht gewährleistet ist oder die Schneckengeometrie wird auf eine reduzierte Fördermenge ausgelegt.

Der technischen Lösung gemäß JP-A-06 126 776 haftet der Nachteil an, daß die Größe des Schneckeneinfüllbereiches konstant ist und beim zeitlich kurzen Einspritzvorgang kein Nachrieseln erfolgt. Somit ist der Füllgrad erheblich von der Größe des Dosierhubes abhängig. Eine ungleichmäßige Füllung ist die Folge. Auch die technische Lösung gemäß JP-A-61-206617 erreicht keine vollständige Füllung der Schneckengänge in jeder axialen Position. Schließlich wird auch von DE-B-11 67 006 keine vollständige und gleichmäßige Füllung erreicht, wobei mit dieser Lösung anstelle die er Forderung ohnehin eine Erhöhung des Spritzvolumens bei gleichem Schneckendurchmesser erreicht werden soll.

*Hegele* hat den Einfluß der Geometrie der Materialeintrittsöffnung und der Form des Materialaufnahmeschachtes im Extruder auf den Durchsatz ermittelt ("Berichte zum 8. Kunststofftechnischen Kolloquium des IKV in Aachen vom 24. bis 26. März 1976", Seite 86/87). Hierbei wurden in einer Versuchsreihe an einem 45 mm-Feststoff-Förderextruder mit zylindrisch glatter Einzugsbuchse Einfüllöffnungen verschiedener Länge, Breite und Form untersucht. Die Ergebnisse dieser Untersuchungen am Extruder zeigten, daß eine Verlängerung der Einfüllöffnung den Durchsatz solange ansteigen läßt, bis ein volumetrischer Wirkungsgrad bei gut rieselndem Pulver von ca. 80 % und bei günstiger Granulatform (Linsenform) von ca. 60 % erreicht wird. Verlängert man die Einfüllöffnung noch mehr, so ergibt sich kein weiteres Ansteigen des Durchsatzes. Die Ursache hierfür liegt darin, daß nur der an der hinteren Einfüllkante gelegene Schneckenbereich Masse einzieht. Im Einfüllschacht bildet sich an der Einfüllvorderkante eine "tote Zone", in welcher die Masse ruht.

Diese für die Extrudertechnik zutreffenden Untersuchungsergebnisse wurden bisher nicht auf die Spritzgießtechnik übertragen. In der Fachwelt hat sich offensichtlich ein Vorurteil gebildet, daß die oben beschriebene, lediglich unvollständige Füllung der Schneckengänge eine systembedingte Eigenart der Spritzgießtechnik und demzufolge nicht zu vermeiden ist. Zur Lösung des Problems, d.h., leere bzw. nur teilweise gefüllte Schneckengänge weitgehend zu vermeiden, hat *Potente* vorgeschlagen (Fachtagung 1991 der Firma Engel Vertriebsgesellschaft mbH, Schwertberg/ Österreich), mit rotierendem Schneckenkolben einzuspritzen, wobei die Rotationsgeschwindigkeitskomponente in Schneckenkanalrichtung der Rücklaufgeschwindigkeitskomponente in Kanalrichtung entsprechen muß. Jedoch wurde bisher kein experimenteller Nachweis erbracht.

Aufgabe der Erfindung ist es, bei der Plastifizierung von Kunststoffen in Plastifiziereinrichtungen von intermittierend arbeitenden Spritzgießmaschinen, bei denen die wirksame Zylinderlänge konstant bleibt, die ungleichmäßige Füllung der Schneckengänge während des Plastifizierens zu vermeiden. Es soll eine Vorrichtung geschaffen werden, mit der möglich wird, die Plastifizierzeit zu vermindern, die Plastifiziermenge zu erhöhen und konstante Bedingungen der Schneckenkanalfüllung als Voraussetzung für das Steuern und Regeln des Plastifiziervorganges zu erreichen.

Die Aufgabe wird gemäß Anspruch 1 gelöst.

Ferner wird vorgeschlagen, daß der Schneckenkolben im Plastifizierzylinder so angeordnet ist, daß bei der, dem maximalen Dosierweg entsprechenden Relativstellung zwischen Plastifizierzylinder und Schneckenkolben die hintere Einfüllkante der Einfüllöffnung unmittelbar dem, dem einspritzseitigen Abschnitt des Schneckenkolbens entgegengesetzt angeordnetem ersten profilierten Gang des Schneckenkolbens zugeordnet ist. Weitere vorteilhafte Ausgestaltungen der Erfindung ergeben sich, sofern die am Plastifizierzylinder ausgestaltete Einfüllöffnung einen größeren Flächeninhalt aufweist als die vom Innendurchmesser des Plastifizierzylinders bestimmte kreisförmige Querschnittsfläche. Ferner hat die Einfüllöffnung eine wesentlich größere axiale als radiale Ausdehnung.

Der wesentliche Vorteil dieser technischen Lösung besteht darin, daß bei der Rücklaufbewegung des Schneckenkolbens eine vollständige Füllung der Schneckengänge mit Kunststoff gewährleistet ist. Beim Plastifizieren ist demzufolge über den Dosierweg der Spritzgießmaschine die gesamte profilierte Schneckenlänge mit Kunststoff gefüllt. Somit werden thermische und stoffliche Inhomogenitäten der Kunststoffschmelze weitgehend vermieden.

Ein Ausführungsbeispiel der Erfindung ist in der Zeichnung dargestellt und wird nachfolgend beschrieben. Es zeigen:
- Fig. 1: die Stellung des Schneckenkolbens vor Beginn des Plastifiziervorganges
- Fig. 2: die Stellung des Schneckenkolbens nach Beendigung des Plastifiziervorganges

Der Kunststoff gelangt über den Einfülltrichter 1 und die am Plastifizierzylinder 2 ausgestaltete Einfüllöffnung 3 in den ersten, unter der Einfüllöffnung 3 liegenden, profilierten Gang 6 des Schneckenkolbens 4. Die Einfüllöffnung 3 ist axial feststehend und entspricht dem Ausgang des Einfülltrichter 1. Durch die Rotationsbewegung des Schneckenkolbens 4 wird das Kunststoffmaterial in Richtung des einspritzseitigen Abschnittes des Schneckenkolbens 4 gefördert. Gleichzeitig mit der Füllung des Sammelraumes 5 mit Kunststoffschmelze erfolgt ein Rücklauf des Schneckenkolbens 4. Der dem einspritzseitigen Abschnitt des Bauteils 4 entgegengesetzt angeordnete erste profilierte Gang 6 des Schneckenkolbens 4 wird während der gesamten Verfahrensdauer des Spritzgießzyklus, vom Beginn des Materialeinzuges über die Materialplastifizierung bis zur Materialeinspritzung, innerhalb eines, von der Einfüllöffnung 3 überdeckten Bereiches des Plastifizierzylinders 2 geführt. Während der gesamten Verfahrensdauer bleibt die wirksame Länge des Zylinders 2 konstant.

Der Schneckenkolben 4 ist im Plastifizierzylinder 2 derart angeordnet, daß bei der, dem maximalen Dosierweg entsprechenden Relativstellung zwischen Plastifizierzylinder 2 und Schneckenkolben 4 die hintere Einfüllkante der Einfüllöffnung 3 unmittelbar dem, dem einspritzseitigen Abschnitt des Schneckenkolbens 4 entgegengesetzt angeordnetem ersten profilierten Gang 6 des Schneckenkolbens 4 zugeordnet ist. Die hintere Einzugskante des ersten, mit Gangprofil versehenen Schneckenbereiches befindet sich also auch beim Rücklauf immer unter der Einfüllöffnung 3. Somit wird ununterbrochen Kunststoff zum Fördern bereitgestellt und nach beendetem Dosierweg sind alle profilierten Schneckengänge mit Kunststoff gefüllt.

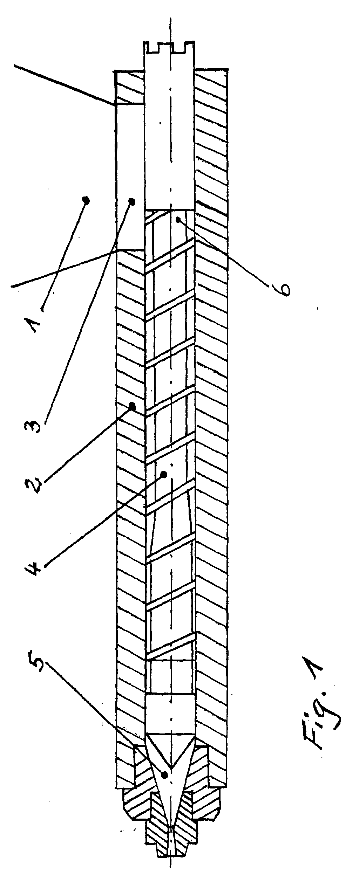

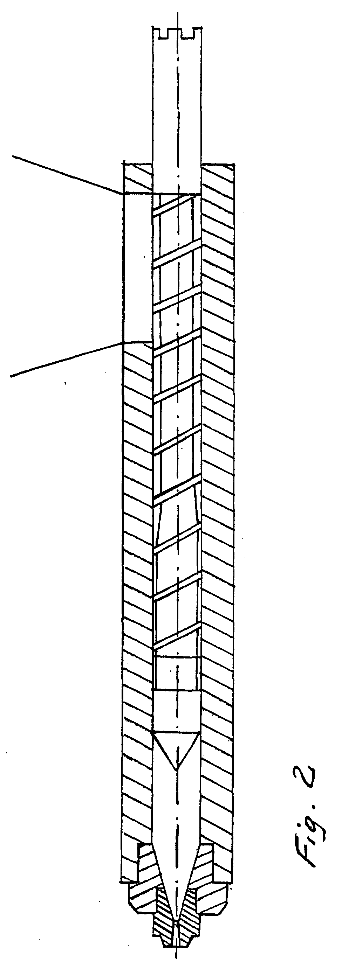

In den Figuren 1 und 2 ist zu erkennen, daß die am Plastifizierzylinder 2 ausgestaltete Einfüllöffnung 3 einen größeren Flächeninhalt aufweist als diejenige kreisförmige Querschnittsfläche, die vom Innendurchmesser des Plastifizierzylinders 2 bestimmt wird. Die Einfüllöffnung 3 weist eine wesentlich größere axiale als radiale Ausdehnung auf, wobei die axiale Ausdehnung wesentlich größer ist als die radiale Ausdehnung.

## Patentansprüche

1. Vorrichtung zur Plastifizierung von Kunststoffen in Plastifiziereinrichtungen von intermittierend arbeitenden Spritzgießmaschinen, bestehend aus einem Plastifizierzylinder (2) konstanter Lange mit einer axial feststehenden und dem Trichkrausgang entsprechenden Einfüllöffnung (3) für das zu verarbeitende Material und einen im Plastifizierzylinder (2) radial drehbar sowie axial verschiebbar gelagerten Schneckenkolben (4), mit dem das über die Einfüllöffnung (3) zugeführte Material aufgeschmolzen, in einen Sammelraum (5) gefördert und nachfolgend in die Form eingespritzt wird,
dadurch gekennzeichnet,
daß die im Plastifizierzylinder (2) ausgestaltete Einfüllöffnung (3) eine solche axiale Länge aufweist, daß sich der, dem einspritzseitigen Abschnitt des Schneckenkolbens (4) entgegengesetzt angeordnete erste profilierte Gang (6) des Schneckenkolbens (4) sowohl in der hintersten möglichen Position des Schneckenkolbens (4) als auch in seiner vordersten möglichen Position innerhalb der Einfüllöffnung (3) befindet.

2. Vorrichtung zur Plastifizierung von Kunststoffen in Plastifiziereinrichtungen von intermittierend arbeitenden Spritzgießmaschinen nach Anspruch 1,
dadurch gekennzeichnet,
daß der Schneckenkolben (4) im Plastifizierzylinder (2) derart angeordnet ist, daß bei der, dem maximalen Dosierweg entsprechenden Relativstellung zwischen Plastifizierzylinder (2) und Schneckenkolben (4) die hintere Einfüllkante der Einfüllöffnung (3) unmittelbar dem, dem einspritzseitigen Abschnitt des Schneckenkolbens (4) entgegengesetzt angeordnetem ersten profilierten Gang (6) des Schnekkenkolbens (4) zugeordnet ist.

3. Vorrichtung zur Plastifizierung von Kunststoffen in Plastifiziereinrichtungen von intermittierend arbeitenden Spritzgießmaschinen nach Anspruch 1,
dadurch gekennzeichnet,
daß die am Plastifizierzylinder (2) ausgestaltete Einfüllöffnung (3) einen größeren Flächeninhalt aufweist als die vom Innendurchmesser des Plastifizierzylinders (2) bestimmte kreisförmige Querschnittsfläche.

4. Vorrichtung zur Plastifizierung von Kunststoffen in Plastifiziereinrichtungen von intermittierend arbeitenden Spritzgießmaschinen nach den Ansprüchen 1 und 3,
dadurch gekennzeichnet,
daß die axiale Ausdehnung der am Plastifizierzylinder (2) ausgestalteten Einfüllöffnung (3) wesentlich größer ist als die radiale Ausdehnung dieser Einfüllöffnung (3).

## Claims

1. A device for plasticizing plastics in plasticizing units of intermittently operating injection-molding machines, which have a plasticizing cylinder (2) having a constant length with an axially fixed fill hole (3) corresponding to the funnel outlet for the material to be processed, and a worm piston (4) secured in the plasticizing cylinder (2) in a radially rotatable and axially moveable manner, with which the material supplied via the fill hole (3) is conveyed into an accumulator chamber (5) and then injected into the mold, characterized by the fact that the fill hole (3) introduced on the plasticizing cylinder (2) has an axial length in which the first profiled spiral (6) of the worm piston (4) arranged opposite the injection-side section of the worm piston (4) is located inside the fill hole (3) in both the rearmost possible position of the worm piston (4) and in its foremost possible position.

2. The device for plasticizing plastics in plasticizing units of intermittently operating injection-molding machines according to claim 1, characterized by the fact that the worm piston (4) in the plasticizing cylinder (2) is arranged in such a way that the back fill edge of the fill hole (3) is allocated directly to the first profiled spiral (6) of the worm piston (4) arranged opposite the injection-side section of the worm piston (4) given the relative setting between the plasticizing cylinder (2) and worm piston (4) corresponding to the maximal metering path.

3. The device for plasticizing plastics in plasticizing units of intermittently operating injection-molding machines according to claim 1, characterized by the fact that the fill hole (3) introduced on the plasticizing cylinder (2) has a larger area than the circular cross-sectional surface defined by the inside diameter of the plasticizing cylinder (2).

4. The device for plasticizing plastics in plasticizing units of intermittently operating injection-molding machines according to claims 1 and 3, characterized by the fact that the axial expansion of the fill hole (3) introduced on the plasticizing cylinder (2) is significantly larger than the radial expansion of this fill hole (3).

## Revendications

1. Dispositif de plastification de matières plastiques dans des unités de plastification de machines à mouler par injection fonctionnant par intermittence, comprenant un cylindre de plastification (2) de longueur constante avec un orifice d'alimentation (3), fixe selon un axe radial et coïncidant avec la sortie de la trémie, pour la matière à transformer et une vis-piston (4) logée pivotante dans le sens radial et coulissante dans le sens axial dans le cylindre de plastification (2), au moyen de laquelle la matière amenée à travers l'orifice d'alimentation (2) est fondue, transportée dans un espace collecteur (5), puis injectée dans le moule, caractérisé en ce que l'orifice d'alimentation (3) aménagé dans le cylindre de plastification (2) présente une longueur axiale telle que le premier filet (6) profilé de la vis-piston (4) situé à l'opposé de la section côté injection de la vis-piston (4) se trouve à l'intérieur de l'orifice d'alimentation (3) aussi bien dans la position la plus postérieure possible de la vis-piston (4) que dans sa position la plus avancée possible.

2. Dispositif de plastification de matières plastiques dans des unités de plastification de machines à mouler par injection fonctionnant par intermittence selon la revendication 1, caractérisé en ce que la vis-piston est disposée dans le cylindre de plastification (2) de sorte qu'en position relative entre le cylindre de plastification (2) et la vis-piston (4), correspondant à la course maximale de dosage, le bord arrière de chargement de l'orifice d'alimentation (3) est directement affecté au premier filet (6) profilé de la vis-piston (4), situé à l'opposé de la section côté injection de cette dernière (4).

3. Dispositif de plastification de matières plastiques dans des unités de plastification de machines à mouler par injection fonctionnant par intermittence selon la revendication 1, caractérisé en ce que l'orifice d'alimentation (3) aménagé sur le cylindre de plastification (2) présente une superficie supérieure à l'aire de section circulaire définie par le diamètre intérieur du cylindre de plastification (2).

4. Dispositif de plastification de matières plastiques dans des unités de plastification de machines à mouler par injection fonctionnant par intermittence selon les revendication 1 et 3, caractérisé en ce que la dimension axiale de l'orifice d'alimentation (3) aménagé sur le cylindre de plastification (2) est sensiblement supérieure à sa dimension radiale.
